# EUROPÄISCHE PATENTSCHRIFT

(11) **EP 1 579 146 B1**
(45) Veröffentlichungstag und Bekanntmachung des Hinweises auf die Patenterteilung: **26.09.2007**
(21) Anmeldenummer: 03814442.4
(22) Anmeldetag: 25.07.2003
(51) Int. Cl.: F16P 3/14, B27G 19/00

(54) **VORRICHTUNG ZUM BERÜHRUNGSSCHUTZ UND VERFAHREN ZUM SCHUTZ VOR DEM BERÜHREN EINESBEWEGLICHEN TEILS**
DEVICE FOR PROTECTING AGAINST ACCIDENTAL CONTACT AND METHOD FOR PROTECTING AGAINST ACCIDENTAL CONTACT OF A DISPLACEABLE PART
DISPOSITIF DE PROTECTION CONTRE LES CONTACTS ACCIDENTELS ET PROCEDE DE PROTECTION CONTRE LES CONTACTS ACCIDENTELS AVEC UNE PARTIE MOBILE

(30) Priorität: 23.12.2002 DE 10261791
(43) Veröffentlichungstag der Anmeldung: 28.09.2005
(60) Teilanmeldung: 07110067.1
(73) Patentinhaber: ROBERT BOSCH GMBH, 70442 Stuttgart (DE)
(72) Erfinder: VOIGTLANDER, Klaus, 73117 Wangen (DE)
(86) Internationale Anmeldenummer: PCT/DE2003/002506
(87) Internationale Veröffentlichungsnummer: WO 2004/061361

(56) Entgegenhaltungen:
- FR-A- 981 268
- US-A- 4 661 797
- US-A- 5 081 406
- US-A1- 2002 017 184

## Beschreibung

### Technisches Gebiet

Die Erfindung betrifft eine Vorrichtung zum Berührungsschutz und ein Verfahren zum Schutz vor dem Berühren eines beweglichen Teils. Sowohl das Verfahren als auch die Vorrichtung dienen zum Schutz von Körperteilen einer Person vor dem Sägeblatt einer Tischkreissäge.

Verletzungen an Kreissägen zählen zu den häufigsten Arbeitsunfällen. Dabei sind das Absägen oder Ansägen von Fingern durch Einschieben von Holz und das schnelle Zurückgeschlagen oder Verkanten von Holzstücken mit Verletzungen an Fingern, Händen oder Armen zu unterscheiden.

### Stand der Technik

Aus dem Stand der Technik US 2002/0017184 A1 ist eine Tischkreissäge mit einem Sicherheitssystem bekannt. Die Tischkreissäge weist ein einstellbares Sägeblatt, ein Erfassungssystem zur Erfassung eines Kontakts zwischen einer Person und dem Sägeblatt und einen Bremsmechanismus zum Anhalten des Sägeblatts auf, wenn mit dem Erfassungssystem ein Kontakt zwischen der Person und dem Sägeblatt festgestellt wurde. Das System zur Erfassung des Kontakts zwischen Person und Sägeblatt weist einen Sensor auf, der als kapazitiver Sensor ausgebildet ist. Nachteilhafterweise reagiert das vorgeschlagene Sicherheitssystem erst dann, wenn ein Kontakt zwischen der Person und dem Sägeblatt stattgefunden hat. Eine Prävention ist nicht vorgesehen. Die Wahrscheinlichkeit einer Verletzung ist daher nach wie vor sehr hoch.

Schutzvorrichtungen in Form von Hauben, die den Bereich oberhalb des Sägeblatts abdecken, sind zwar bekannt, werden aber zugunsten eines einfacheren Arbeitens oft abmontiert. Sie sind daher in der Handhabung entweder unpraktisch oder aber bieten keinen ausreichenden Schutz.

Aus US 5081406 ist eine Vorrichtung gemäß dem Oberbegriff des Anspruchs 1 bekannt.

### Darstellung der Erfindung

Ein Vorteil der Erfindung besteht darin, dass mit der vorgeschlagenen Vorrichtung zum Berührungsschutz und dem Verfahren zum Schutz vor dem Berühren eines bewegten Teils eine ausreichende Sicherheit geboten und zugleich die Person, die mit der Maschine arbeitet, in ihrer Arbeit nicht behindert wird.

Ein weiterer Vorteil Erfindung besteht darin, dass sich die Vorrichtung zum Berührungsschutz und das Verfahren zum Schutz vor dem Berühren eines bewegten Teils einfach implementieren lassen.

Zudem ist es von Vorteil, dass eine Berührung zwischen der Person und dem die Person gefährdenden Teil, beispielsweise dem Sägeblatt, rechtzeitig erkannt werden kann, sodass noch vor der Berührung des die Person gefährdenden Teils entsprechende Sicherheitsmaßnahmen eingeleitet werden können.

Die erfindungsgemäße Vorrichtung zum Berührungsschutz weist einen Sensor zur Erzeugung und Erfassung eines elektromagnetischen Feldes auf, welcher in der Nähe eines nicht zu berührenden bewegbaren Teils angeordnet ist. Zudem weist die erfindungsgemäße Vorrichtung eine mit dem Sensor verbundene Auswerteinheit zur Auswertung des vom Sensor erzeugbaren Sensorsignals auf, wobei mit der Auswerteinheit ein Auswertesignal erzeugbar ist. Schließlich ist eine mit der Auswerteinheit verbundene Steuereinheit vorgesehen, die derart ausgebildet und betreibbar ist, dass die Bewegung des Teils abhängig vom Auswertesignal steuerbar ist.

Das erfindungsgemäße Verfahren zum Schutz vor dem Berühren eines bewegbaren Teils weist folgende Schritte auf. Mit einem Schwingkreis wird ein hochfrequentes elektromagnetisches Signal erzeugt. Anschließend wird mit einer Auswerteinheit ein Charakteristikum des elektromagnetischen Signals erfasst und überwacht. Anhand des Charakteristikums wird bestimmt, ob auf die Bewegung des bewegten Teils Einfluss genommen werden soll.

Vorteilhafte Weiterbildungen der Erfindung ergeben sich aus den in den abhängigen Patentansprüchen angegebenen Merkmalen.

Erfindungsgemäß ist das bewegbare Teil das Sägeblatt einer stationären Kreissäge. Damit kann eine Person vor Verletzungen, beispielsweise in Form von Schnittwunden durch Ab- oder Ansägen der Finger oder in Form von Prellungen durch das schnelle Zurückschlagen oder Verkanten von Holzstücken, geschützt werden.

Bei einer Weiterbildung der erfindungsgemäßen Vorrichtung zum Berührungsschutz ist ein weiterer Sensor vorgesehen. Die beiden Sensoren sind auf den beiden Seiten des Sägeblatts angeordnet. Auf diese Art und Weise lässt sich die Sicherheit während des Betriebs der Kreissäge weiter erhöhen.

Alternativ dazu können bei der erfindungsgemäßen Vorrichtung drei weitere Sensoren vorgesehen sein. Jeweils zwei der Sensoren sind auf jeder Seite des Sägeblatts angeordnet. Auf diese Art und Weise kann die Erkennungsgenauigkeit an der vorderen Sägekannte erhöht werden.

Zur Lösung der Aufgabe wird ferner vorgeschlagen, dass der Sensor der erfindungsgemäßen Vorrichtung eine flache Antenne zur Erzeugung elektromagnetischer Wellen aufweist. Dadurch wird die Implementierung vereinfacht.

Erfindungsgemäß ist vorgesehen, dass der Sensor auf der Unterseite eines Klemmschutzes für das Sägeblatt angeordnet ist. Dies hat den Vorteil, dass der Sensor vor einer mechanischen Beschädigung geschützt ist und gleichzeitig die Oberseite der Arbeitsfläche der Kreissäge frei gestaltbar ist.

Vorteilhafterweise ist bei der erfindungsgemäßen Vorrichtung zum Berührungsschutz ein mit der Antenne verbundener Schwingkreis vorgesehen und die Auswerteeinheit derart ausgebildet, dass damit die Verstimmung des Schwingkreises auswertbar ist.

Es ist insbesondere von Vorteil, wenn die von der Antenne der erfindungsgemäßen Vorrichtung abgestrahlten Wellen im Bereich des ISM-Bandes liegen. Eine Benutzung der in diesem Band liegenden Frequenzen ist weltweit zulässig und vereinfacht das Zulassungsverfahren vor den Behörden erheblich.

Bei einer Weiterbildung des erfindungsgemäßen Verfahrens zum Schutz vor dem Berühren eines bewegten Teils dient als Charakteristikum die Verstimmung des Schwingkreises. Auf diese Art und Weise kann einfach unterschieden werden, ob demnächst das Werkstück oder ein Finger der das Werkstück führenden Person mit dem Sägeblatt in Berührung kommen wird.

Bei einer zusätzlichen Weiterbildung des erfindungsgemäßen Verfahrens können als Charakteristikum die Resonanzfrequenz des Schwingkreises und/oder die Geschwindigkeit der Veränderung der Resonanzfrequenz und/oder die Anzahl der Resonanzfrequenzen dienen. Diese Charakteristika sind einfach zu ermitteln und erlauben einen ausreichenden Aufschluss über die vorliegende Situation.

Schließlich kann bei dem erfindungsgemäßen Verfahren zusätzlich eine Änderung des Drehmoments des bewegten Teils erfasst werden und die Änderung des Drehmoments zusätzlich dazu verwendet werden, um zu bestimmen, ob auf die Bewegung des bewegten Teils Einfluss genommen werden soll. Damit wird die Genauigkeit der Erfassung weiter erhöht.

### Kurze Beschreibung der Zeichnungen

Im Folgenden wird die Erfindung mit mehreren Ausführungsbeispielen anhand von zwölf Figuren weiter erläutert.
- Figur 1: zeigt einen Ausschnitt einer Kreissäge mit der erfindungsgemäßen Vorrichtung in Form einer prinzipiellen Darstellung.
- Figur 2: zeigt in Form eines Blockschaltbildes eine mögliche Ausführungsform des elektrischen Teils der erfindungsgemäßen Vorrichtung.
- Figur 3: zeigt einen Ausschnitt der Kreissäge mit dem Sägeblatt ohne Werkstück.
- Figur 4: zeigt den Frequenzverlauf des Messsignals bei einer laufenden Kreissäge ohne Werkstück.
- Figur 5: zeigt die Kreissäge beim Auseinandersägen eines Werkstücks.
- Figur 6: zeigt den Frequenzverlauf des Messsignals während die Kreissäge das Werkstück zersägt.
- Figur 7: zeigt die Kreissäge beim gleichzeitigen Zersägen eines Werkstücks und eines Fingers.
- Figur 8: zeigt den Frequenzverlauf des Messsignals während die Kreissäge ein Werkstück und einen Finger ansägt.
- Figur 9: zeigt in der Draufsicht eine mögliche Anordnung des Sensors gegenüber dem Kreissägeblatt.
- Figur 10: zeigt ein Ablaufdiagramm einer möglichen Ausführungsform des erfindungsgemäßen Verfahrens zum Berührungsschutz.
- Figur 11: zeigt eine Tischkreissäge mit zwei Sensoren zur Berührungserfassung.
- Figur 12: zeigt eine Tischkreissäge mit vier Sensoren zur Berührungserfassung.
- Figur 13: zeigt einen gemessenen Frequenzverlauf während eines Schnitts durch Holz und einen Finger.

### Wege zur Ausführung der Erfindung

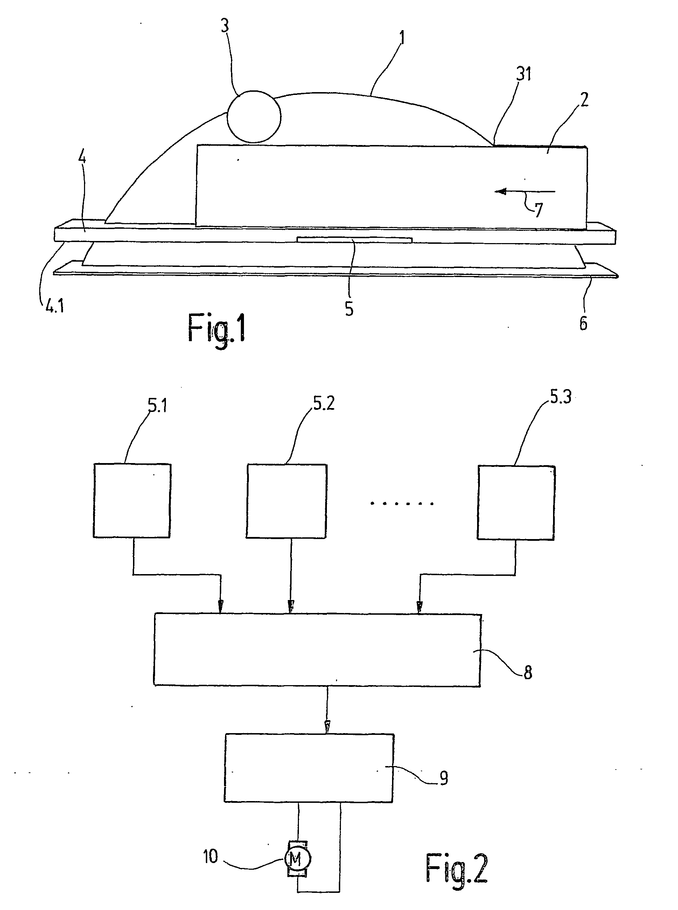

In Figur 1 ist ein Ausschnitt einer stationären Kreissäge mit der erfindungsgemäßen Vorrichtung zum Berührungsschutz gezeigt. Ein Werkstück 2, beispielsweise ein Stück Holz, wird in Bewegungsrichtung 7 über einen Tisch parallel zum Sägeblatt 1 geschoben. Das Werkstück 2 wird dabei an der Schnittkante 31 mit Hilfe des Sägeblatts 1 auseinandergesägt. Zur Führung und zum Niederhalten des Werkstücks 2 kommt es vor, dass eine Person das Werkstück in unmittelbarer Nähe des Sägeblatts 1 mit Hilfe seiner Finger festhält. In Figur 1 ist dazu ein Finger andeutungsweise gezeigt und mit dem Bezugszeichen 3 versehen. Um nun vermeiden, dass die Finger der Person mit dem Sägeblatt 1 in Berührung kommen, ist ein Sensor 5 der erfindungsgemäßen Vorrichtung zum Berührungsschutz vorgesehen, der in unmittelbarer Nähe des Sägeblatts 1 angeordnet ist. In der in Figur 1 gezeigten Ausführung befindet sich der Sensor 5 auf Unterseite 4.1 eines Klemmschutzes 4, welcher das Sägeblatt 1 umgibt. Der Klemmschutz 4 kann als Kunststoffteil ausgebildet sein und verhindert ein Verklemmen des Sägeblatts 1, beispielsweise wenn dieses gegenüber dem Arbeitstisch schräg gestellt ist oder wenn das Sägeblatt durch das Werkstück quer zur Sägerichtung eine Belastung erfährt. Zudem können mit Hilfe des Klemmschutzes 4 unterschiedlich dicke Sägeblätter zum Einsatz kommen, ohne dass sich das Sägeblatt 1 verklemmt. Der Klemmschutz 4 wird im Folgenden auch als Radom (radar dome) bezeichnet. Der Klemmschutz 4 dient für den Sensor 5 als Schutz gegen Beschädigungen und, falls dieser aus Kunststoff ausgeführt ist, gleichzeitig zur elektrischen Isolierung des Sensors 5.

Die Antenne des Sensors 5 ist als Patch-Antenne ausgebildet und weist eine plane Bauform auf. Die Antenne wird gegen eine unterhalb dieser Antenne angeordnete Masse 6, die auch als Bezugspotenzial bezeichnet wird, mit einer Frequenz von beispielsweise 2,45 MHz angeregt.

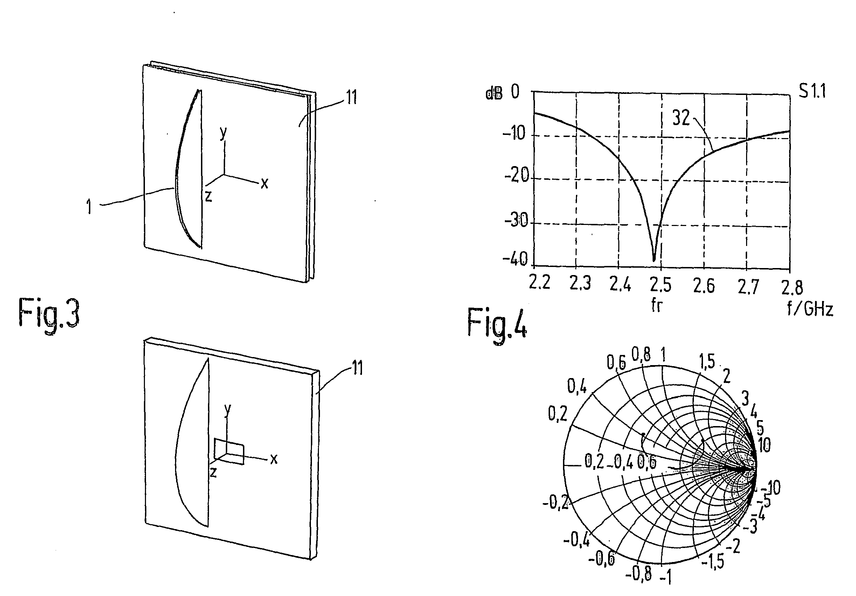

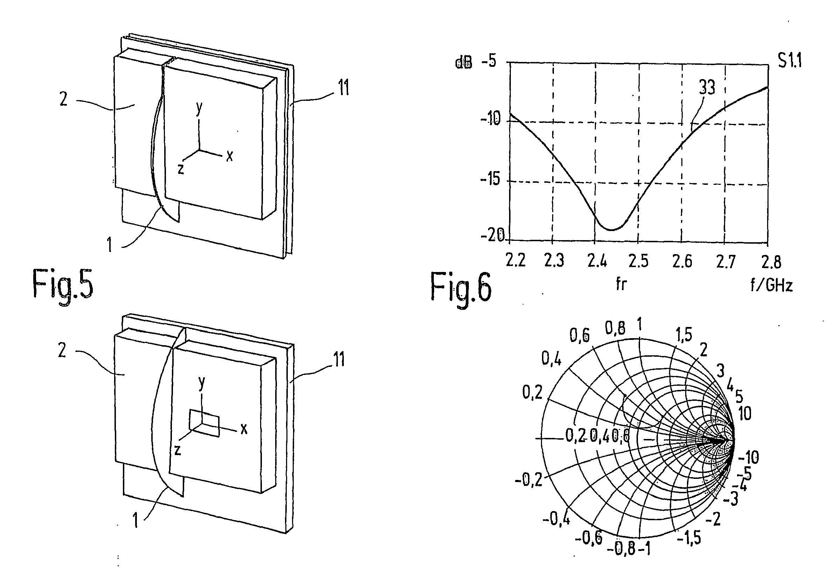

Läuft das Sägeblatt 1, wie dies in Figur 3 dargestellt ist, im Leerlauf, das heißt in der Nähe des Sägeblatts 1 befindet sich weder ein Werkstück 2 noch ein Finger 3 oder eine Hand einer Person, so ergibt sich das in Figur 4 zeigte Frequenzspektrum 32. Wie deutlich zu erkennen ist, weist das Frequenzspektrum 32 lediglich eine Resonanzfrequenz fr auf, die bei ca. 2,48 GHz liegt. In Figur 4 im unteren Bereich ist das entsprechende Smith-Diagramm für den Betrieb im Leerlauf gezeigt.

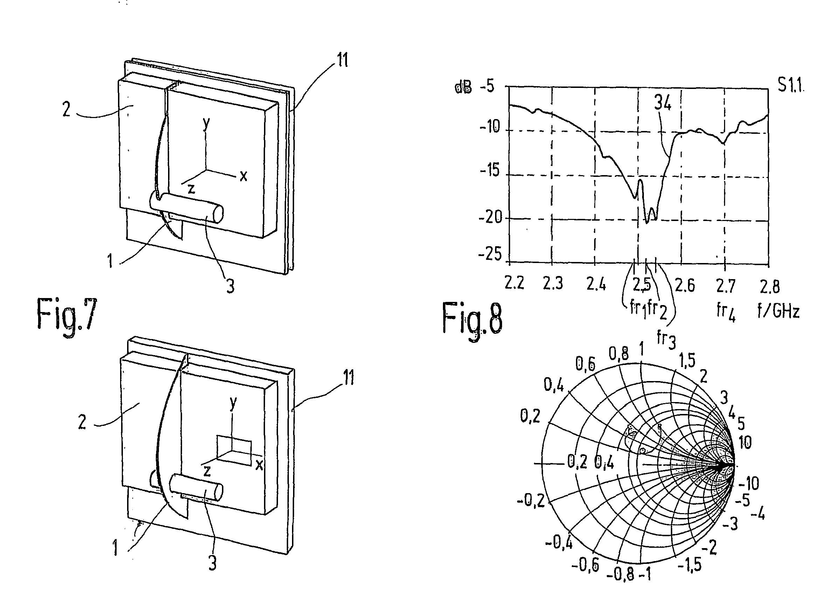

Wird nun ein Werkstück 2 in die Nähe des Sägeblatts 1 gebracht, wie dies in Figur 5 gezeigt ist, ergibt sich das in Figur 6 oben gezeigte Frequenzdiagramm 33, wobei zu erkennen ist, dass sich die Referenzfrequenz fr etwas verschoben hat und nunmehr bei ca. 2,44 GHz liegt. Zudem ist aus Figur 6 zu erkennen, dass sich auch die Anpassung leicht geändert hat. Es ergibt sich jedoch nach wie vor eine stetige Kurve. Die Änderung erfolgt im Bereich von 2 bis 10 cm pro Sekunde und kann als Messverschiebung adaptiv verfolgt werden.

Nähert sich nun ein Finger 3, wie dies in Figur 7 gezeigt ist, dem Sägeblatt 1, führt dies zu einer starken Verstimmung des Schwingkreises, die sich in einer Verschiebung Referenzfrequenz fr und mehreren Nebenresonanzen veräußert. Das entsprechende Frequenzdiagramm mit dem dazu gehörenden Frequenzverlauf 34 ist in Figur 8 gezeigt. Daraus sind nunmehr eine Reihe von Resonanzfrequenzen fr1, fr2, fr3 und fr4 zu entnehmen. In Figur 8 ist im unteren Bereich das entsprechende Smith-Diagramm gezeigt.

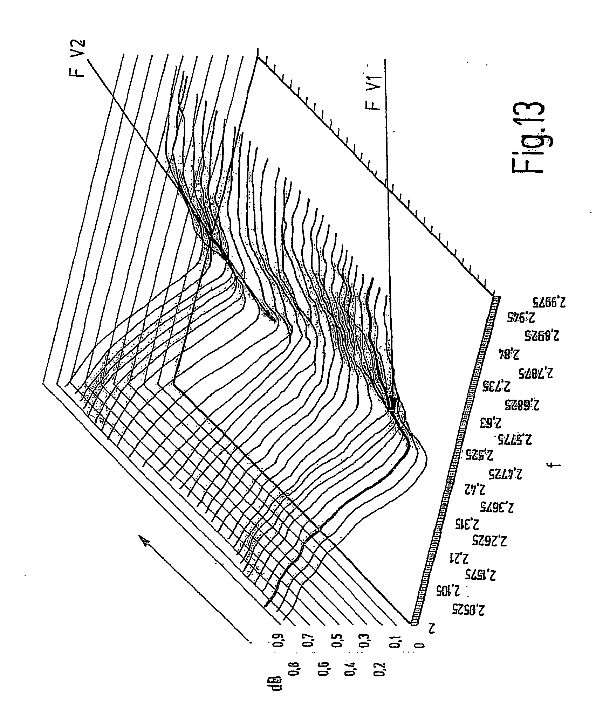

Es zeigt sich, dass bei einer Annäherung des Fingers 3 an das Sägeblatt 1 stets die Resonanzfrequenz nach unten verschoben wird. Zudem wird durch dielektrische Verluste die Resonanzkurve verbreitet. Entsprechendes ist aus Figur 13 zu entnehmen. Dabei ist in dem in Figur 13 zeigten Diagramm nach oben die Dämpfung in dB und nach rechts hin ansteigend die Frequenz aufgetragen. Die vorderen Frequenzverläufe FV1 zeigen die Vorderkante des Holzes und die weiter hinten liegenden Frequenzverläufe FV2 den Finger 3 am Sägeblatt 1.

Diese Verstimmung kann mit der Vorschubgeschwindigkeit, mit der das Werkstück am Sägeblatt 1 entlang verschoben wird, geschehen, was zu einem Ansägen oder Absägen des Fingers 3 führen würde. Mit Hilfe eines adaptiven Algorithmus zur adaptiven Frequenzregelung können zusätzliche Nebenmaxima oder weitere Resonanzfrequenzen fr1 - fr4 erkannt werden, was auf die Anwesenheit eines Fingers oder einer Hand schließen lässt.

Die Verstimmung kann aber auch durch eine ruckartige Bewegung des Fingers 3 entstehen, verursacht durch ein Rückschlagen oder ein Verklemmen des Werkstücks 2. Eine schnelle Veränderung des Frequenzspektrums kann direkt ausgewertet werden und erlaubt einen Rückschluss darauf, ob das Werkstück einen Rückschlag verursacht hat oder das Sägeblatt 1 verklemmt wird, oder ob in soweit keine Gefahr besteht.

Der vom Sägeblatt 1 erzeugte Dopplereffekt führt, nachdem das Sägeblatt seine Nominaldrehzahl erreicht hat, zu einem konstanten Wert und kann daher eliminiert werden, sodass durch den Dopplereffekt keine Fehlauslösungen erfolgen.

Stehen ferner noch weitere Informationen, wie beispielsweise der Schlupf der Säge oder/und die Änderung des Drehmoments des Sägeblatts 1 zur Verfügung, können diese auch in die Auswertung miteinbezogen werden.

Die Parameter der Antenne und das Material aus dem der Klemmschutz 4 gebildet wird, sind dabei so gewählt, dass normales Holz einen optimalen Messeffekt zeigt, das heißt eine gute Anpassung bei der Mittenfrequenz vorliegt.

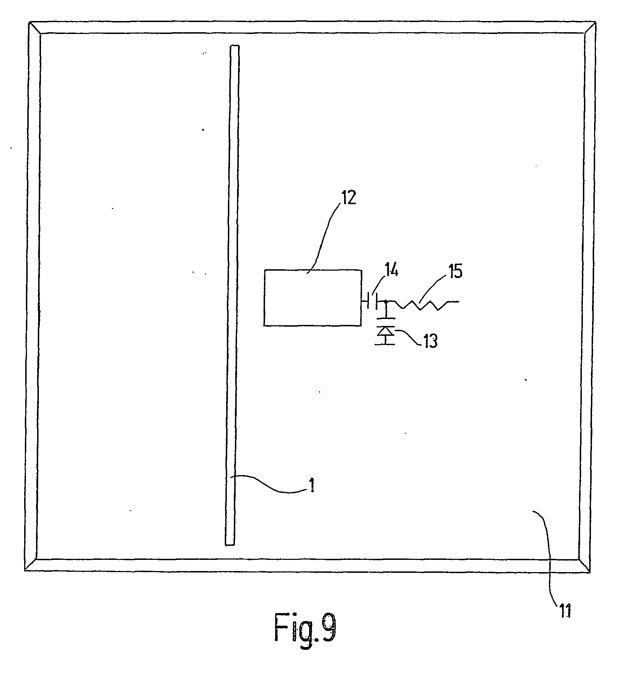

In Figur 9 ist die Anordnung des Sensors mit der Antenne 12, einem mit dieser verbunden Kondensator 14 sowie einer Induktivität 15 und einer gegen Masse geschalteten Varaktor-Diode 13 in der Draufsicht gezeigt. Es ist dabei zu erkennen, dass die Antenne 12 in der Nähe des Sägeblatts 1 und parallel zur Fläche des Arbeitstisches 11 angeordnet ist. Im in Figur 9 gezeigten Ausführungsbeispiel befindet sich die Antenne 12 aus der Draufsicht betrachtet zudem in der Mitte des Sägeblatts 1.

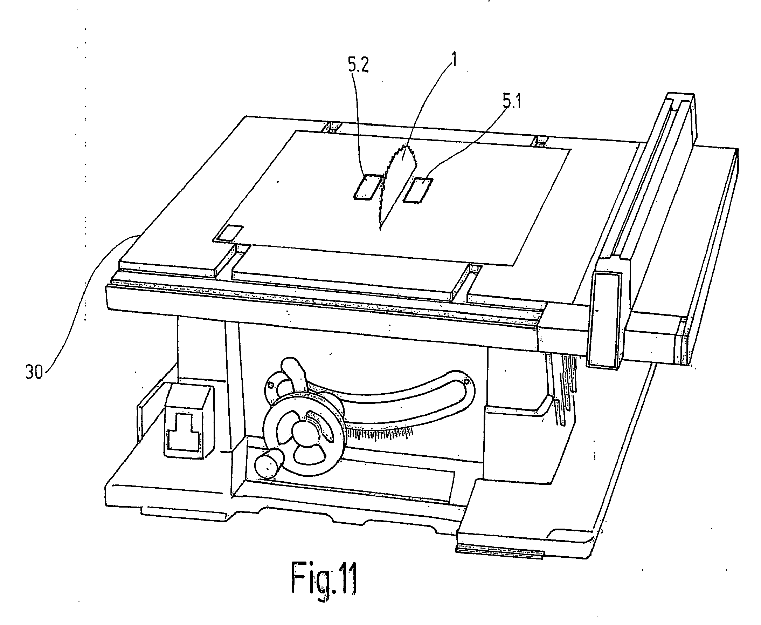

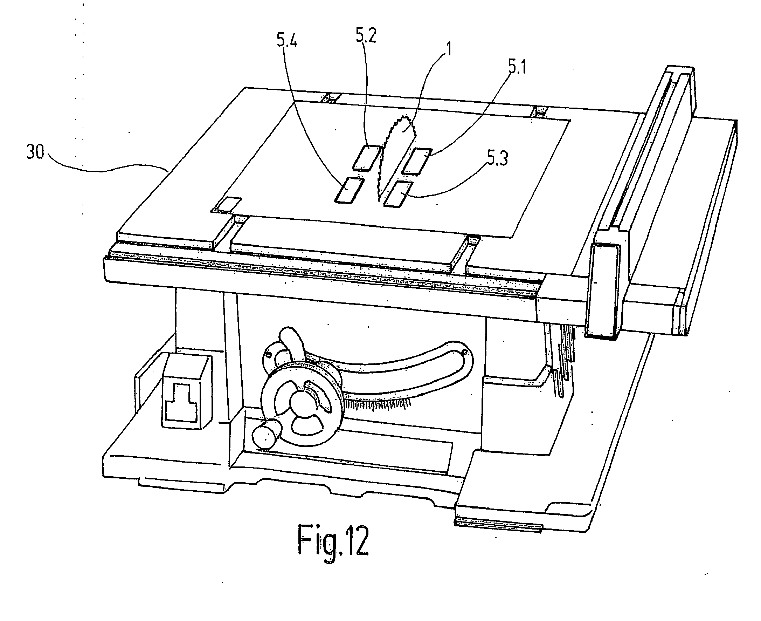

Sind weitere Sensoren vorhanden, so können diese, wie in den Figuren 11 und 12 angegeben ist, angeordnet sein.

In Figur 11 ist auf der rechten Seite des Sägeblatts 1 ein erster Sensor 5.1 und auf der linken Seite des Sägeblatts ein zweites Sensor 5.2 angeordnet. Die beiden Sensoren befinden sich aus der Draufsicht betrachtet jeweils in der Mitte des Sägeblatts 1.

Bei der in Figur 12 gezeigten Ausführungsform sind im vorderen Bereich des Sägeblatts 1 zwei weitere Sensoren 5.3 und 5.4 angeordnet, wobei der Sensor 5.3 zusammen mit dem Sensor 5.1 auf der einen Seite des Sägeblatts und der Sensor 5.4 zusammen mit dem Sensor 5.2 auf der anderen Seite des Sägeblatts angeordnet ist. Die beiden Sensoren von 5.3 und 5.4 sind am Arbeitstisch 11 so angeordnet, dass mit ihnen das Einschieben eines Körperteiles, beispielsweise eines Fingers oder einer Hand in die Nähe des Sägekante detektiert werden kann. Mit Hilfe der beiden Sensoren 5.1 und 5.2 können vom Werkstück 2 verursachte Rückschläge erfasst werden.

Zur besseren Ortsbestimmung ist es hilfreich mit zwei oder mehr Sensoren zu arbeiten. Um die Erkennungsgenauigkeit an der Sägekannte 31 zu erhöhen, können deshalb, wie in Figur 12 zeigt ist, zwei weitere Sensoren vorgesehen sein. Die einzelnen Antennen 12 können dabei auch um einen gewissen Winkel, beispielsweise um 30 Grad, aus der Ebene herausgedreht werden, sodass damit der vordere Bereich der Kreissäge, also die Sägekante 31, besser abgedeckt und erfasst werden kann. Der Klemmschutz 4 kann dabei auf der Oberseite weiterhin plan ausgeführt sein, da sich die Sensoren auf der Unterseite 4.1 des Klemmschutzes 4 befinden.

Werden mehrere Sensoren 5.1, 5.2 und 5.3 verwendet, ergibt sich für die Verknüpfung der elektrischen Komponenten der erfindungsgemäßen Vorrichtung zum Berührungsschutz das in Figur 2 gezeigte Blockdiagramm. Die Sensoren 5.1, 5.2 und 5.3 sind mit einer Auswerteeinheit 8 verbunden, die die von den Sensoren 5.1, 5.2 und 5.3 stammenden Messsignale auswertet und an eine Steuereinheit 9 ein entsprechendes Auswahlsignal weiterleitet. Die Steuereinheit 9 bestimmt nun anhand des Auswahlsignals, ob auf einen Motor 10, der zum Antrieb des Sägeblatts 1 dient, beispielsweise durch Bremsen, Einfluss genommen werden soll. Mit der Steuereinheit 9 können auch weitere Komponenten, wie beispielsweise eine aktive Bremse oder auch eine Vorrichtung zur automatischen Absenkung des Sägeblatts 1 verbunden sein. Neben den Sensoren 5.1, 5.2 und 5.3 können noch weitere Sensoren mit der Auswerteeinheit 8 verbunden sein.

Die Reflektionsdämpfung kann mit einer Stehwellenbrücke oder einem Richtkoppler ausgewertet werden. Eine Phasenänderung ist mit Hilfe eines Phasendetektors erkennbar. Die Betriebsfrequenz wird dazu im zulässigen Bereich gewobbelt. Es können auch Meßmethoden angewendet werden, wie sie in Netzwerkanalysatoren (Vektor Network Analyser) eingesetzt werden.

Zum Stoppen der Kreissäge bzw. des Sägeblatts 1 der Kreissäge kurz vor oder bei der Berührung des Sägeblatts wird ein Verfahren eingesetzt, das auf der Resonanzverschiebung durch den Einfluss von Körperteilen, beispielsweise einem Finger oder einer Hand in Mikrowellenbereich beruht. Als Frequenzband wird das die ISM-Band von 2.400 MHz bis 2.483,5 MHz gewählt, da für dieses Frequenzband handliche Antennen verfügbar sind und der hauptsächlich zu bearbeitende Werkstoff, nämlich Holz oder Kunststoff, in Folge des Skin-Effekts noch bis zu einer Materialstärke von zirka 10 cm durchdrungen wird. Alternative Frequenzbereiche sind 433 MHz, 866 MHz, oder 5,8 GHz. Durch die Benutzung dieser ISM-Bänder ist die Möglichkeit für eine weltweite Zulassung gewährleistet.

Grundsätzlich geruht die Idee gemäß der Erfindung nicht auf einer Radar-Entfernungsmessung, sondern wertet im Mikrosekundenbereich eine Veränderung des die Antenne umgebenden Dielektrikums aus. Auch die Auswertung einer elektrischen Veränderung ist möglich.

Nähert sich ein Finger, dessen Dielektrizitätskonstante εr zwischen 40 und 80 liegt, dem Sägeblatt, ergibt sich eine starke Verstimmung der Antenne.

Zur Eingrenzung des benötigten Frequenzbands kann eine adaptive (langsame) Regelung eingesetzt werden, die Materialveränderungen, wie beispielsweise unterschiedliche Materialdicken, eine vordere und eine hintere Kante des Werkstücks, Äste und so weiter ausblendet und die Betriebsfrequenz immer in eine optimalen Lage verschiebt.

Damit lassen sich auch externe Störungen von anderen ISM-Geräten, wie Mikrowellenherden, Geräten mit einer Bluetooth-Schnittstelle oder kleinen Funknetzen zur Datenübertragung erkennen und durch geeignete Maßnahmen wirksam unterdrücken.

Mittels einer langsamen adaptiven Regelung werden Materialveränderungen ausgeblendet und die Betriebsfrequenz immer in eine optimale Lage verschoben. Dazu wird die Mittenfrequenz der Antenne 12 über den Schwingkreis, bestehend aus dem Kondensator 14, der Varaktor-Diode 13 und der Induktivität 15, verstimmt. Die Anordnung kann dabei entweder einmal oder mittensymmetrisch an der resonanten Länge angeschlossen werden. Werden externe Störungen auf bestimmten Frequenzen erkannt, kann damit die Auswertefrequenz ebenfalls verschoben werden.

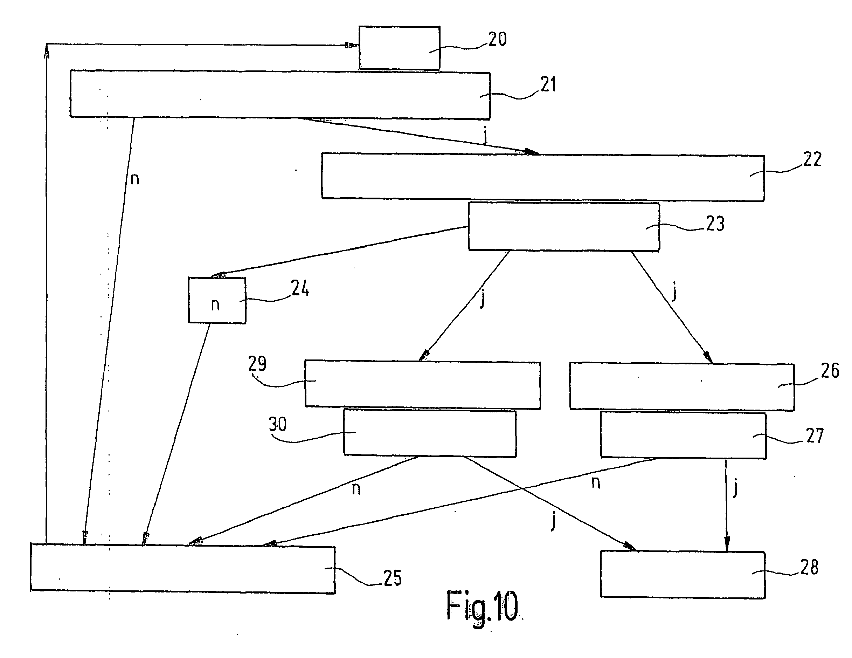

Figur 10 zeigt das Flussdiagramm zur Auswertung des Sensorsignals. Das Verfahren zum Berührungsschutz wird anhand einer Vorrichtung zum Berührungsschutz mit zwei Sensoren beschrieben. Meldet der erste Sensor 5.1 eine Resonanzverschiebung, dargestellt durch den Schritt 21 und den davon abgehenden mit J gekennzeichneten Pfeil, so wird im Schritt 22, 23 mit Hilfe des zweiten Sensors 5.2 entschieden, ob die von den beiden Sensoren gelieferten Messsignale ähnliche Effekte aufweisen. Falls dies nicht der Fall ist, das heißt die beiden Messsignale unterscheiden sich erheblich voneinander, kann davon ausgegangen werden, dass der oder die Finger das Sägeblatt nicht berühren und an diesem vorbei geführt werden. Es wird über den Zweig 24 zu Schritt 25 gesprungen. Liefern die beiden Sensoren 5.1 und 5.2 jedoch ähnliche und sich schnell ändernde Messergebnisse, ist davon auszugehen, dass das Werkstück einen Rückschlag verursacht hat, sodass ein sofortiger Stopp 28 des Sägeblatts 1 erforderlich ist. Die Erkennung erfolgt mittels einem schnellen Algorithmus 27. Bei einer langsamen Änderung, gekennzeichnet durch den Schritt 29, wird über einen langsamen Algorithmus 30 entschieden, ob die Veränderung durch das Werkstück hervorgerufen wurde, oder ob ein Körperteil in die in unmittelbare Nähe des Sägeblatts 1 gelangt ist. Der langsame Algorithmus 30 erkennt dies und geht für den Fall einer Gefahr zu Schritt 28, in dem veranlasst wird, dass das Sägeblatt gestoppt wird. Andernfalls wird zu Schritt 25 gegangen.

Da es sich normalerweise um stetige Bewegungen handelt, können auch Methoden des SAR (Synthetic Aperture Radar) eingesetzt werden.

Für die Unterbringung des Sensors genügt eine ebene Fläche mit circa 50 mal 50 mm, die mit dem dielektrischen Radom abgedeckt wird. Über elektrische Anschlüsse kann der Sensor mit Spannung versorgt werden und über eine Datenschnittstelle können die Messdaten bzw. die Auswertedaten weitergeleitet werden.

Die erfindungsgemäße Lösung hat gegenüber einer optischen Überwachung den Vorteil, dass zwischen den Fingern und den Sensoren keine optische Verbindung bestehen muss. Vielmehr können sich zwischen dem Sensor und den Fingern auch Gegenstände, wie beispielsweise das Werkstück, befinden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang Erfindung sowie ihre Äquivalente zu verlassen.

## Patentansprüche

1. Vorrichtung zum Schutz von Körperteilen einer Person vor einer Berührung mit einem rotierenden Sägeblatt (1) einer Kreissäge, mit einem Sensor (5) zur Erzeugung und Erfassung eines elektromagnetischen Felds, welcher in der Nähe des Sägeblatts angeordnet ist, mit einer mit dem Sensor verbundenen Auswerteeinheit (8) zur Auswertung des vom Sensor erzeugbaren Sensorsignals, wobei mit der Auswerteeinheit (8) ein Auswertesignal erzeugbar ist, und mit einer mit der Auswerteeinheit verbundenen Steuereinheit (9), die derart ausgebildet ist und dazu dient, dass die Bewegung des Sägeblatts (1) abhängig vom Auswertesignal steuerbar ist, **dadurch gekennzeichnet, dass** der Sensor (5) auf der Unterseite (4.1) eines Klemmschutzes (4) für das Sägeblatt (1) angeordnet ist.

2. Vorrichtung nach Anspruch 1, **dadurch gekennzeichnet, dass** ein weiterer Sensor (5.2) vorgesehen ist, wobei die beiden Sensoren (5.1, 5.2) auf den beiden Seiten des Sägeblatts (1) angeordnet sind.

3. Vorrichtung nach Anspruch 1 oder 2, **dadurch gekennzeichnet, dass** drei weitere Sensoren (5.2, 5.3, 5.4) vorgesehen sind, wobei jeweils zwei Sensoren (5.1, 5.2; 5.3, 5.4) auf jeder Seite des Sägeblatts (1) angeordnet sind.

4. Vorrichtung nach einem der Ansprüche 1 bis 3, **dadurch gekennzeichnet, dass** der Sensor (5) eine flache Antenne (12) zur Erzeugung elektromagnetischer Wellen aufweist.

5. Vorrichtung nach Anspruch 4, **dadurch gekennzeichnet, dass** ein mit der Antenne (12) verbundener Schwingkreis vorgesehen ist, und dass die Auswerteeinheit (8) derart ausgebildet ist, dass damit die Verstimmung des Schwingkreises auswertbar ist.

6. Vorrichtung nach Anspruch 4 oder 5, **dadurch gekennzeichnet, dass** die von der Antenne (12) abstrahlbaren Wellen im Bereich des ISM-Bandes liegen.

7. Verfahren zum Schutz von Körperteilen einer Person vor einer Berührung mit einem rotierenden Sägeblatt einer Kreissäge, umfassend die folgenden Schritte:
mit einem Schwingkreis und einer Antenne (12) eines auf der Unterseite (4.1) eines Klemmschutzes (4) für das Sägeblatt (1) angeordneten Sensors (5) wird ein hochfrequentes elektromagnetisches Signal erzeugt,
mit einer Auswerteeinheit (8) wird ein Charakteristikum des elektromagnetischen Signals erfasst und überwacht,
anhand des Charakteristikums wird bestimmt, ob auf die Bewegung des rotierenden Sägeblatts (1) Einfluss genommen werden soll.

8. Verfahren nach Anspruch 7, **dadurch gekennzeichnet, dass** als Charakteristikum die Verstimmung des Schwingkreises dient.

9. Verfahren nach Anspruch 7 oder 8, **dadurch gekennzeichnet, dass** als Charakteristikum die Resonanzfrequenz (fr) des Schwingkreises und/oder die Geschwindigkeit der Veränderung der Resonanzfrequenz und/oder die Resonanzverbreiterung dienen.

10. Verfahren nach einem der Ansprüche 7 bis 9, **dadurch gekennzeichnet, dass** eine Änderung des Drehmoments des Sägeblatts (1) erfasst wird und die Änderung zusätzlich verwendet wird, um zu bestimmten, ob auf die Bewegung des rotierenden Sägeblatts (1) Einfluss genommen werden soll.

## Claims

1. Apparatus for protecting body parts of a person from being touched by a rotating saw blade (1) of a circular saw, comprising a sensor (5) for generating and detecting an electromagnetic field, which sensor is arranged in the vicinity of the saw blade, comprising an evaluation unit (8), which is connected to the sensor, for evaluating the sensor signals which can be generated by the sensor, it being possible for the evaluation unit (8) to generate an evaluation signal, and comprising a control unit (9) which is connected to the evaluation unit and is designed and used in such a way that the movement of the saw blade (1) can be controlled as a function of the evaluation signal, **characterized in that** the sensor (5) is arranged on the lower face (4.1) of a jamming guard (4) for the saw blade (1).

2. Apparatus according to Claim 1, **characterized in that** a further sensor (5.2) is provided, with the two sensors (5.1, 5.2) being arranged on either side of the saw blade (1).

3. Apparatus according to Claim 1 or 2, **characterized in that** three further sensors (5.2, 5.3, 5.4) are provided, with in each case two sensors (5.1, 5.2; 5.3, 5.4) being arranged on each side of the saw blade (1).

4. Apparatus according to one of Claims 1 to 3, **characterized in that** the sensor (5) has a flat antenna (12) for generating electromagnetic waves.

5. Apparatus according to Claim 4, **characterized in that** a resonant circuit which is connected to the antenna (12) is provided, and **in that** the evaluation unit (8) is designed in such a way that it can be used to evaluate the detuning of the resonant circuit.

6. Apparatus according to Claim 4 or 5, **characterized in that** the waves which can be emitted by the antenna (12) are in the range of the ISM band.

7. Method for protecting body parts of a person from being touched by a rotating saw blade of a circular saw, comprising the following steps:
a radio-frequency electromagnetic signal is generated by a resonant circuit and an antenna (12) of a sensor (5) which is arranged on the lower face (4.1) of a jamming guard (4) for the saw blade (1),
a characteristic of the electromagnetic signal is detected and monitored by an evaluation unit (8),
the characteristic is used to determine whether the movement of the rotating saw blade (1) should be influenced.

8. Method according to Claim 7, **characterized in that** the detuning of the resonant circuit is used as a characteristic.

9. Method according to Claim 7 or 8, **characterized in that** the resonant frequency (fr) of the resonant circuit and/or the rate of change in the resonant frequency and/or resonance broadening are/is used as a characteristic.

10. Method according to one of Claims 7 to 9, **characterized in that** a change in torque of the saw blade (1) is detected and the change is additionally used to determine whether the movement of the rotating saw blade (1) should be influenced.

## Revendications

1. Dispositif de protection contre les accidents corporels par contact avec le disque rotatif (1) d'une scie circulaire, comprenant un capteur (5) générant et saisissant un champ électromagnétique, ce capteur étant installé à proximité du disque de scie,
une unité d'exploitation (8) reliée au capteur pour exploiter le signal fourni par le capteur, l'unité d'exploitation (8) générant un signal d'exploitation et une unité de commande (9) reliée à l'unité d'exploitation, cette unité de commande étant réalisée pour servir à commander le mouvement du disque de scie (1) en fonction du signal d'exploitation,
**caractérisé en ce que**
le capteur (5) est installé sur la face inférieure (4.1) d'un dispositif de protection de pincement (4) du disque de scie (1).

2. Dispositif selon la revendication 1,
**caractérisé par**
un autre capteur (5.2), les deux capteurs (5.1, 5.2) étant installés sur les deux côtés du disque de scie (1).

3. Dispositif selon la revendication 1 ou 2,
**caractérisé par**
trois autres capteurs (5.2, 5.3, 5.4) et chaque fois deux capteurs (5.1, 5.2 ; 5.3, 5.4) sont prévus de chaque côté du disque de scie (1).

4. Dispositif selon l'une des revendications 1 à 3,
**caractérisé en ce que**
le capteur (5) a une antenne plate (12) pour générer des ondes électromagnétiques.

5. Dispositif selon la revendication 4,
**caractérisé par**
un circuit oscillant relié à l'antenne (12) et l'unité d'exploitation (8) est réalisée pour exploiter ainsi le désaccord du circuit oscillant.

6. Dispositif selon la revendication 4 ou 5,
**caractérisé en ce que**
les ondes rayonnées par l'antenne (12) sont dans la bande haute fréquence ISM.

7. Procédé de protection contre des accidents corporels par contact avec du disque de scie rotatif d'une scie circulaire comprenant les étapes suivantes :
on génère un signal électromagnétique haute fréquence, avec une unité d'exploitation (8) avec un circuit oscillant et une antenne (12) d'un capteur (5) installé sur la face inférieure (4.1) d'un dispositif anti-pincement (4) du disque de scie (1) on saisit et on surveille une caractéristique du signal électromagnétique, avec une unité d'exploitation,
à partir de cette caractéristique, on détermine s'il existe une influence sur le mouvement du disque de scie (1) en rotation.

8. Procédé selon la revendication 7,
**caractérisé en ce que**
la caractéristique est le désaccord du circuit oscillant.

9. Procédé selon la revendication 7 ou 8,
**caractérisé en ce que**
la caractéristique est la fréquence de résonance (fr) du circuit oscillant et/ou la vitesse de variation de la fréquence de résonance et/ou de développement de la résonance.

10. Procédé selon l'une des revendications 7 à 9,
**caractérisé en ce qu'**
on saisit une variation du couple du disque de scie (1) et on utilise la variation en outre pour déterminer si une influence est exercée sur le mouvement du disque de scie (1) en rotation.
